# EUROPÄISCHE PATENTSCHRIFT

(11) **EP 2 331 912 B1**
(45) Veröffentlichungstag und Bekanntmachung des Hinweises auf die Patenterteilung: **12.03.2014**
(21) Anmeldenummer: 09780881.0
(22) Anmeldetag: 21.07.2009
(51) Int. Cl.: G01D 5/245

(54) **ANORDNUNG UND VERFAHREN ZUR ERZEUGUNG EINES REFERENZIMPULSES FÜR EIN POSITIONSMESSGERÄT**
ARRANGEMENT AND METHOD FOR GENERATING A REFERENCE IMPULSE FOR A POSITION MEASURING DEVICE
SYSTÈME ET PROCÉDÉ DE PRODUCTION D'UNE IMPULSION DE RÉFÉRENCE POUR UN APPAREIL DE MESURE DE POSITION

(30) Priorität: 26.09.2008 DE 102008049140
(43) Veröffentlichungstag der Anmeldung: 15.06.2011
(73) Patentinhaber: Dr. Johannes Heidenhain GmbH, 83301 Traunreut (DE)
(72) Erfinder: BÖHM, Gerd, 83119 Obing/Kleinornach (DE)
(86) Internationale Anmeldenummer: PCT/EP2009/059363
(87) Internationale Veröffentlichungsnummer: WO 2010/034537

(56) Entgegenhaltungen:
- EP-A1- 0 449 037
- EP-A1- 0 621 460
- EP-A1- 1 035 404
- DE-A1- 19 614 165
- DE-A1-102004 002 722
- US-A1- 2005 278 109

## Beschreibung

Die Erfindung betrifft eine Anordnung, sowie ein Verfahren zur Erzeugung eines Referenzimpulses nach Anspruch 1, bzw. Anspruch 6. Weiter betrifft die Erfindung ein Positionsmessgerät mit einer entsprechenden Anordnung zur Erzeugung eines Referenzimpulses nach Anspruch 11. Ein Referenzimpuls wird bei inkrementalen Positionsmessgeräten benötigt, um einen Bezugspunkt für die Positionsmessung festzulegen.

Inkrementale Positionsmessgeräte sind aus einer Vielzahl von Druckschriften bekannt. Sie dienen vor allem der Bestimmung von relativen Verschiebungen oder der absoluten Position von Maschinenteilen, beispielsweise bei Werkzeug- oder Messmaschinen.

Derartige Positionsmessgeräte bestehen im Wesentlichen aus einer Maßverkörperung, auf der eine oder mehrere Teilungsspuren aufgebracht sind, und einer Abtasteinrichtung, die die Teilungsspuren abtastet und Weg- bzw. Winkeländerungen in elektrische Signale umwandelt. Bei Längenmessgeräten ist die Maßverkörperung beispielsweise als Maßstab ausgebildet. Wird ein Längenmessgerät zur Messung von relativen Maschinenbewegungen eingesetzt, kann der Maßstab stationär an der Maschine montiert sein, während die Abtasteinheit an einem beweglichen Maschinenteil, etwa einem Werkzeugschlitten, befestigt ist, dessen Relativbewegung gegenüber der Maschine gemessen werden soll. Bei einer Verfahrbewegung des Werkzeugschlittens bewegt sich die Abtasteinheit in einer Abtastebene in Messrichtung parallel zu den auf dem Maßstab angeordneten Teilungsspuren, die sich in einer Maßstabsebene befinden und tastet die Teilungsspuren ab. Dabei werden Positionssignale erzeugt, die die relative Positionsänderung der Abtasteinheit gegenüber dem Maßstab anzeigen.

Die Teilungsspuren bei inkrementalen Positionsmessgeräten bestehen aus in Messrichtung gleichmäßig hintereinander angeordneten Codeelementen. Derartige Teilungsspuren werden auch als Inkrementalspuren bezeichnet. Aus der Abtastung einer Inkrementalspur werden meist entweder zwei zueinander um 90° phasenverschobene Positionssignale oder vier Positionssignale, die die Phasenlagen 0°, 90°, 180°, 270° aufweisen, gewonnen. Daneben sind auch Positionsmessgeräte bekannt, die drei Positionssignale mit den Phasenlagen 0°, 120°, 240° erzeugen. Bei gleichförmiger Bewegung der Abtasteinheit relativ zur Maßverkörperung sind diese Positionssignale weitgehend sinusförmig. Die Positionsbestimmung erfolgt durch Zählung zurückgelegter Signalperioden. Um aus der Messung relativer Positionen eine absolute Position ermitteln zu können, muss ein Bezugspunkt geschaffen werden. Hierzu dient wenigstens eine sogenannte Referenzmarke, die beispielsweise auf einer Referenzspur neben der inkrementalen Teilungsspur angeordnet ist und die ebenfalls von der Abtasteinheit abgelesen wird. Beim Überfahren der Referenzmarke entsteht ein analoger Strom- oder Spannungspuls, aus dem in weiterer Verarbeitung ein rechteckförmiges digitales Signal, der sog. Referenzimpuls, generiert wird.

Der Referenzimpuls dient schließlich in einer Folgeelektronik zur Bestimmung der Referenzposition, die als Bezugspunkt für die Positionsmessung verwendet wird. Die Verarbeitung des analogen Strom- oder Spannungspulses zum Referenzimpuls kann beispielsweise mittels eines Komparators erfolgen, bei dem das analoge Eingangssignal mit einer definierten Schaltschwelle verglichen und dessen Ausgang entsprechend geschaltet wird.

Zentrale Anforderungen an den Referenzimpuls sind eine definierte Lage und Breite bezogen auf die Positionssignale. Werden diese nicht erfüllt, kann es in der Folgeelektronik bei der logischen Verknüpfung des Referenzimpulses mit den Positionssignalen zur Ermittlung des Bezugspunkts zu Fehlern kommen: ist der Referenzimpuls zu schmal, kann es passieren, dass er nicht erkannt wird, ist er zu breit, kann er unter Umständen an zwei Stellen detektiert werden. Besonders problematisch ist es auch, dass in beiden Fällen die Lage des Referenzimpulses bezogen auf die Positionssignale darüber entscheiden kann, ob er richtig erkannt wird oder nicht. So kann in Grenzfällen bereits eine geringfügige Änderung der Lage des Referenzimpulses, hervorgerufen beispielsweise durch Temperaturschwankungen, über die richtige Erkennung des Referenzimpulses entscheiden. Sowohl ein fehlender, als auch ein doppelt erkannter Referenzimpuls führt zu jedoch einem Fehlerfall, der einen Ausfall der Maschine, an der das Positionsmessgerät betrieben wird, bedeuten kann.

Die Lage des Referenzimpulses wird bisher vorwiegend durch aufwändige mechanische Justage der Abtasteinheit nach Anbau des Positionsmessgeräts an die Zielapplikation, beispielsweise eine Werkzeugmaschine oder ein Waferscanner, eingestellt. So wird bei manchen Abtastprinzipien durch Drehen der Abtasteinheit der analoge Referenzimpuls relativ zur inkrementalen Teilungsspur verschoben. Die Breite des Referenzimpulses kann durch Veränderung der Komparatorschwelle, also der Schaltschwelle, die der analoge Strom- bzw. Spannungspuls über- bzw. unterschreiten muss, um die Einschalt- bzw. Ausschaltflanke des Referenzimpulses zu erzeugen, eingestellt werden. Alternativ kann dem analogen Referenzimpuls auch ein positiver oder negativer Offset überlagert werden. Je höher die Auflösung des Positionsmessgerätes ist, desto höher ist der Aufwand für diese mechanische und elektrische Justage. Bei Teilungsperioden im Bereich weniger Mikrometer ist diese Methode kaum noch zielführend. Dazu kommt, dass bei diesen Auflösungen thermischen Ausdehnungen, Verschmutzungseffekte etc. Größenordnungen erreichen, die Lage und Breite des digitalen Referenzimpulses selbst bei exakter mechanischer Justage der Abtasteinheit in kritischem Umfang beeinflussen.

Es ist daher Aufgabe der Erfindung, eine Anordnung zur Erzeugung eines Referenzimpulses mit definierter Lage und Breite bezogen auf die Positionssignale der Inkrementalspur anzugeben.

Diese Aufgabe wird gelöst durch eine Anordnung nach Anspruch 1. Vorteilhafte Details des Verfahrens ergeben sich aus den von Anspruch 1 abhängigen Ansprüchen.

Es wird nun eine Anordnung zur Erzeugung eines Referenzimpulses für ein Positionsmessgerät vorgeschlagen, das eine Maßverkörperung mit wenigstens einer Inkrementalspur und wenigstens einer Referenzmarke, sowie eine Abtasteinheit zur Erzeugung von Positionssignalen durch Abtasten der wenigstens einen Inkrementalspur und zur Erzeugung eines analogen Referenzimpulses durch Abtasten der wenigstens einen Referenzmarke, umfasst, wobei in der Anordnung der analoge Referenzimpuls in einer Referenzimpuls-Speichereinheit als gespeicherter Referenzimpuls speicherbar ist und der gespeicherte Referenzimpuls, sowie wenigstens ein Positionssignal einer Referenzimpuls-Erzeugungseinheit zugeführt sind, die den Referenzimpuls in Abhängigkeit vom gespeicherten Referenzimpuls und dem Auftreten einer Setzbedingung einschaltet und bei Auftreten einer Rücksetzbedingung ausschaltet und Setz- und Rücksetzbedingung aus dem wenigstens einen Positionssignal ableitbar sind.

Weiter ist es Aufgabe der Erfindung, ein Verfahren zur Erzeugung eines Referenzimpulses mit definierter Lage und Breite bezogen auf die Positionssignale der Inkrementalspur anzugeben.

Diese Aufgabe wird gelöst durch ein Verfahren nach Anspruch 6. Vorteilhafte Details des Verfahrens ergeben sich aus den von Anspruch 6 abhängigen Ansprüchen.

Hierzu wird ein Verfahren zur Erzeugung eines Referenzimpulses für ein Positionsmessgerät vorgeschlagen, das eine Maßverkörperung mit wenigstens einer Inkrementalspur und wenigstens einer Referenzmarke, sowie eine Abtasteinheit zur Erzeugung von Positionssignalen durch Abtasten der wenigstens einen Inkrementalspur und zur Erzeugung eines analogen Referenzimpulses durch Abtasten der wenigstens einen Referenzmarke, umfasst, wobei das Verfahren folgende Schritte aufweist:
- Speichern des analogen Referenzimpulses in der Referenzimpuls-Speichereinheit und Ausgabe des gespeicherten Referenzimpulses an die Referenzimpuls-Erzeugungseinheit,
- Einschalten des Referenzimpulses in der Referenzimpuls-Erzeugungseinheit in Abhängigkeit vom gespeicherten Referenzimpuls und dem Auftreten einer Setzbedingung, die aus wenigstens einem Positionssignal ableitbar ist,
- Ausschalten des Referenzimpulses in der Referenzimpuls-Erzeugungseinheit nach Auftreten einer Rücksetzbedingung, die aus wenigstens einem Positionssignal ableitbar ist

Weitere Vorteile sowie Einzelheiten der vorliegenden Erfindung ergeben sich aus der nachfolgenden Beschreibung anhand der Figuren. Dabei zeigt
- Figur 1: eine stark vereinfachte Darstellung eines Längenmessgeräts in zwei räumlichen Ansichten,
- Figur 2: Signaldiagramme von Positionssignalen und Referenzimpulsen,
- Figur 3: ein Blockdiagramm einer erfindungsgemäßen Anordnung,
- Figur 4: eine Referenzimpuls-Speichereinheit,
- Figur 5: einen Richtungsdiskriminator,
- Figur 6: ein Signaldiagramm zur Erläuterung der Funktion des Richtungsdiskriminators aus Figur 5,
- Figur 7: eine Referenzimpuls-Erzeugungseinheit und
- Figur 8: eine alternative Schaltungsvariante einer Referenzimpuls-Erzeugungseinheit.

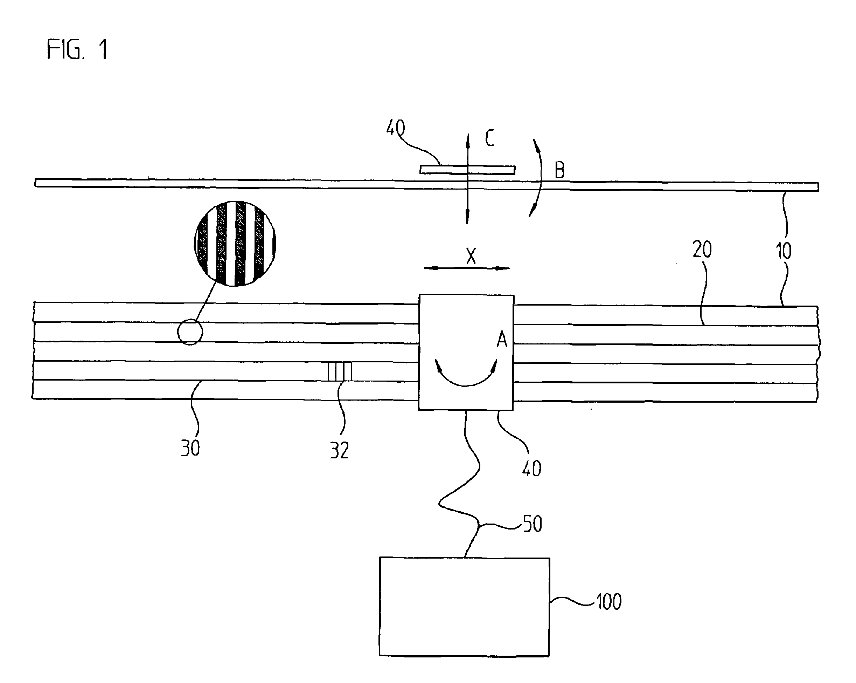

Figur 1 zeigt eine stark vereinfachte Darstellung eines Längenmessgeräts in zwei räumlichen Ansichten. Es umfasst eine Maßverkörperung in Form eines Maßstabs 10 mit einer Inkrementalspur 20 und einer Referenzspur 30, sowie eine Abtasteinheit 40. Die Abtasteinheit 40 ist über Signalleitungen 50 mit einer Folgeelektronik 100 verbunden. Bei der Folgeelektronik 100 kann es sich beispielsweise um eine Impulsformerelektronik handeln, die räumlich nahe an der Abtasteinheit 40, oder auch direkt in der Abtasteinheit 40 angeordnet ist und die die verschiedenen Abtastsignale verarbeitet und an eine Maschinensteuerung (NC) weiterleitet. Alternativ kann die Folgeelektronik 100 aber auch in die Maschinensteuerung integriert sein.

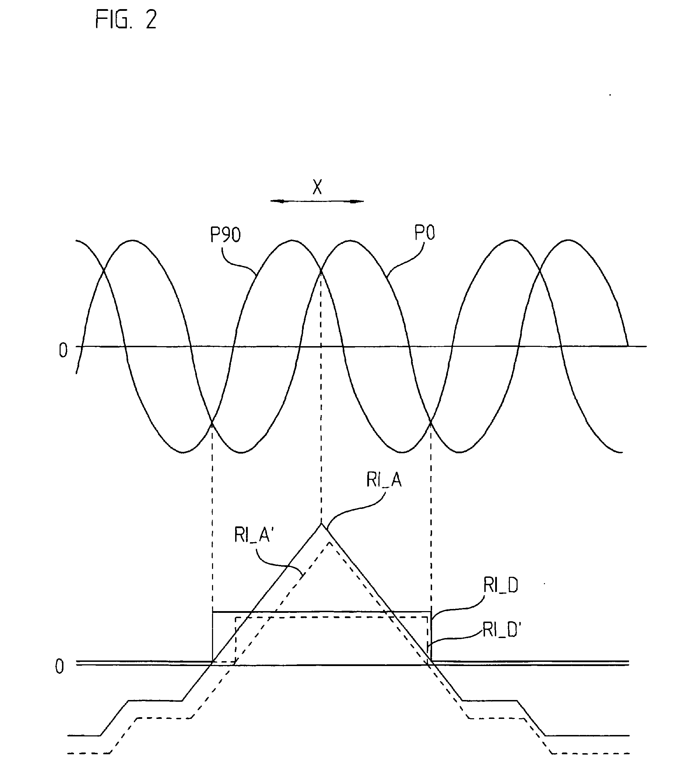

Die aus der Abtastung der Inkrementalspur 20 resultierenden Positionssignale P0 und P90 und der aus der Abtastung einer auf der Referenzspur 30 angeordneten Referenzmarke 32 resultierende analoge Referenzimpuls RI_A, sowie ein digitaler Referenzimpuls RI_D, der in bekannter Weise durch den Vergleich des analogen Referenzimpulses RI_A mit einer definierten Schaltschwelle mittels eines Komparators generiert wird, sind in Figur 2 dargestellt. Die Positionssignale P0, P90 sind bei konstanter Verfahrgeschwindigkeit der Abtasteinheit 40 relativ zur Inkrementalspur 20 in einer Messrichtung X weitgehend sinusförmig, wobei der zurückgelegte Weg zwischen zwei Teilungsstrichen als eine vollständige Periode der Sinusschwingung, entsprechend 360°, aufgelöst wird. Außerdem weisen die Positionssignale P0, P90 eine Phasenverschiebung von 90° zueinander auf. Dies hat zum einen Vorteile bei der weiteren Auswertung der Positionsinformation in der Folgeelektronik, zum anderen ändert sich je nach Bewegungsrichtung der Abtasteinheit 40 die Phasenlage der Positionssignale P0, P90, wodurch eine einfache Bestimmung der Bewegungsrichtung möglich wird.

Anhand der in Figur 2 dargestellten Signale soll die einleitend beschriebene Problematik bei der Erzeugung eines Referenzimpulses RI weiter verdeutlicht werden. Für die folgenden Betrachtungen soll angenommen werden, dass die Folgeelektronik 100 einen Referenzimpuls RI fordert, der eine Breite von 360°, entsprechend einer Teilungsperiode der sinusförmigen Positionssignale P0, P90, aufweist und dessen Lage symmetrisch zur 135°- Position des Positionssignals P90 eingestellt ist. Diese Forderung ist in der Praxis schwer zu erfüllen, da Lage und Breite des Referenzimpulses RI, wie einleitend beschrieben, von vielen Faktoren bestimmt werden. Besonders kritisch ist die mechanische Anordnung der Abtasteinheit 40 relativ zum Maßstab 10, bzw. den abzutastenden Spuren 20, 30. So kann eine Drehung des Abtastkopfes 40 parallel zur Maßstabsebene in Richtung des Pfeils A und/oder eine Längs- bzw. Querverkippung der Abtasteinheit 40, dargestellt durch den Pfeil B, sowohl eine Verschiebung des analogen Referenzimpulses RI_A in Messrichtung X bezogen auf die Positionssignale P0, P90, als auch eine Verformung des analogen Referenzimpulses RI_A bewirken. Eine Änderung des Abtastabstands durch Verschiebung der Abtasteinheit 40 in Pfeilrichtung C schließlich bewirkt eine Veränderung der Signalstärke, die sich weitgehend auf die Signalamplitude des analogen Referenzimpulses RI_A auswirkt. Nicht dargestellt, aber gerade bei hochauflösenden Positionsmessgeräten relevant, sind thermische Ausdehnungseffekte, sowie Verschmutzung der Referenzspur 30. Ein dejustierter analoger Referenzimpuls RI-A', sowie ein daraus resultierender digitaler Referenzimpuls RI-D' sind in Figur 2 mit gestrichelten Linien dargestellt.

Wie einleitend beschrieben, ist das Einstellen des digitales. Referenzimpulses RI_D durch mechanische Justage der Abtasteinheit 40 in Verbindung mit der Veränderung der Breite durch Variation der Komparator-Schaltschwellen (in Figur 2 wurde die Nulllinie als Schaltschwelle verwendet) bzw. durch Überlagerung eines Offsets, bei hochauflösenden Positionsmessgeräten zumindest aufwändig, wenn nicht sogar nicht durchführbar. Würde der digitale Referenzimpuls RI_D als Referenzimpuls RI zur Folgeelektronik 100 übertragen, könnte, insbesondere wenn die tatsächliche Lage des digitalen Referenzimpulses RI_D bezogen auf die Positionssignale P0, P90 von der geforderten Lage abweicht, ein zu schmaler digitaler Referenzimpuls RI_D in der Folgeelektronik 100 dazu führen, dass der Referenzimpuls RI nicht erkannt wird. Bei einem zu breiten digitalen Referenzimpuls RI bestünde dagegen die Gefahr, dass der Referenzimpuls RI zweifach detektiert würde.

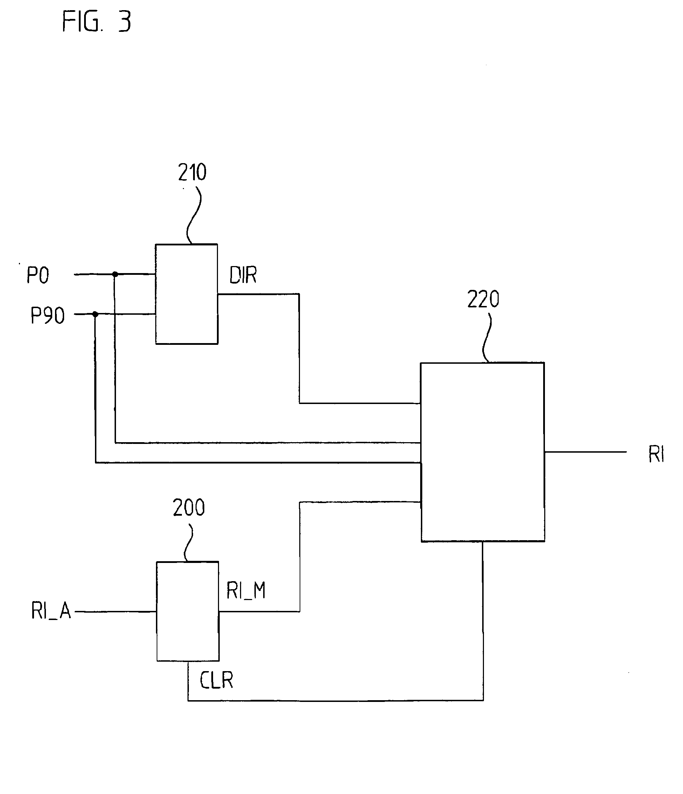

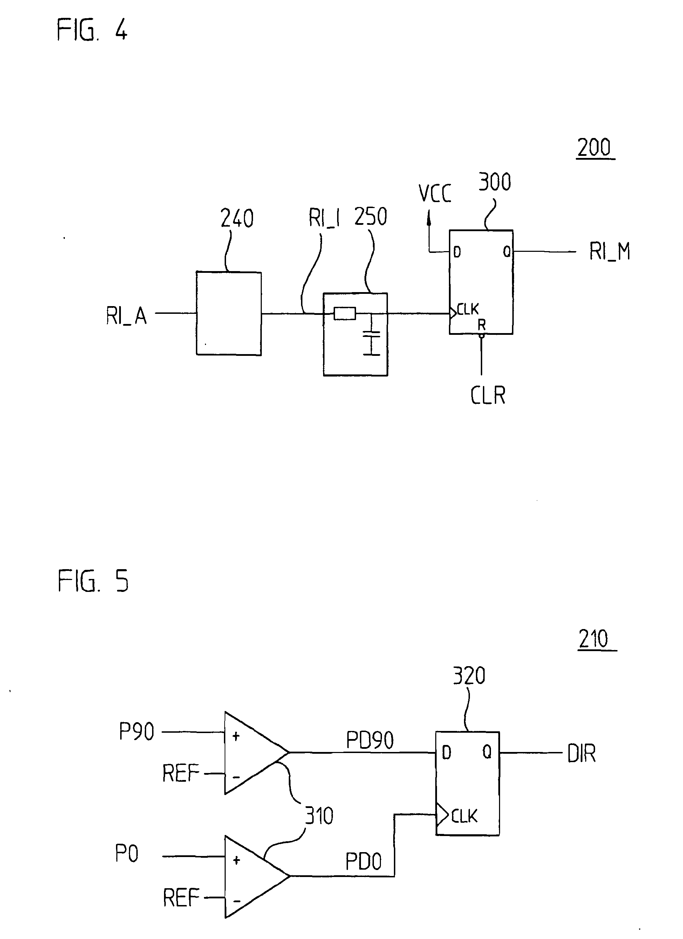

Die Figur 3 zeigt nun eine erfindungsgemäße Anordnung zur Erzeugung eines Referenzimpulses RI, die auch bei einem in Bezug auf Lage und Breite ungenau eingestellten analogen Referenzimpuls RI_A immer genau einen Referenzimpuls RI mit definierter Lage und Breite bezogen auf die Positionssignale P0, P90 erzeugt. Das gilt auch dann, wenn sich die Lage des analogen Referenzimpulses RI_A während des Betriebs an einer Zielapplikation durch thermische oder andere Effekte verändert. Die schaltungstechnischen Details der Anordnung werden in den Figuren 4 bis 8 weiter verdeutlicht.

Die Eingangssignale der Anordnung bilden die in Figur 2 bereits dargestellten, weitgehend sinusförmigen, um 90° zueinander phasenverschobenen Positionssignale P0, P90, sowie der analoge Referenzimpuls RI_A, der aus der Abtastung der Referenzmarke 32 der Referenzspur 30 resultiert.

Der analoge Referenzimpuls RI_A ist einer Referenzimpuls-Speichereinheit 200 zugeführt. Diese ist so ausgestaltet, dass sie ein einmaliges Auftreten des analogen Referenzimpulses RI_A speichert und als gespeicherten Referenzimpuls RI_M ausgibt. Als Kriterium für das Speichern des analogen Referenzimpulses RI_A kann beispielsweise eine positive Signalflanke dienen, die einen bestimmten Schwellenwert überschreitet. Da der analoge Referenzimpuls RI_A unabhängig davon auftritt, in welcher Bewegungsrichtung die Referenzmarke 32 überfahren wird, ist die Speicherung des analogen Referenzimpulses RI_A ebenfalls unabhängig von der Bewegungsrichtung. Über ein Rücksetzsignal CLR kann der gespeicherte Referenzimpuls RI_M wieder gelöscht werden.

Wie in Figur 4 dargestellt, ist zur Realisierung der Referenzimpuls-Speichereinheit 200 ein erstes D-Flipflop 300 einsetzbar, dessen Dateneingang D fest mit der positiven Versorgungsspannung VCC, entsprechend einem logischen Highpegel, verbunden ist und dem am Takteingang CLK ein inter-ner Referenzimpuls RI_I, der aus dem analogen Referenzimpuls RI_A resultiert, zugeführt ist. Bei einer positiven Flanke des internen Referenzimpulses RI_I wird der logische Highpegel am Dateneingang D eingespeichert und erscheint am Ausgang Q als gespeicherter Referenzimpuls RI_M. Das erste D-Flipflop 300 weist weiter einen Rücksetzeingang R auf, über den der Ausgang Q durch das Rücksetzsignal CLR, das bevorzugt lowaktiv ist, auf einen logischen Lowpegel zurücksetzbar ist.

Beim internen Referenzimpuls RI_I kann es sich entweder direkt um den analogen Referenzimpuls RI_A, oder um den in einer Referenzimpuls-Ver arbeitungseinheit 240 verarbeiteten analogen Referenzimpuls RI_A handeln. Ob und in welcher Form der analoge Referenzimpuls RI_A verarbeitet werden muss, hängt im Wesentlichen davon ab, in welcher Form er vorliegt, bzw. welche Anforderungen der Takteingang CLK des ersten D-Flipflops 300 an den internen Referenzimpuls RI_I stellt. So handelt es sich beim analogen Referenzimpuls RI_A in Positionsmessgeräten, die ein optisches Abtastprinzip verwenden, häufig um einen Stromimpuls, während das erste D-Flipflop 300, sofern es in herkömmlicher Technologie ausgeführt ist, einen Spannungsimpuls erwartet. In diesem Fall muss der Stromimpuls, beispielsweise mittels eines Strom-Spannungswandlers, zu einem Spannungsimpuls mit definierter Amplitude verarbeitet werden. Ebenfalls sind Abtastprinzipien bekannt, bei denen der aus der Abtastung der Referenzmarke 32 resultierende analoge Referenzimpuls RI_A aus mehreren Einzelsignalen besteht, die in der Referenzimpuls-Verarbeitungseinheit 240 zu einem internen Referenzimpuls RI_I verknüpft werden. Der interne Referenzimpuls RI_I kann sowohl ein analoges, als auch ein digitales Signal sein.

Um ein fehlerhaftes Einspeichern, hervorgerufen durch Störimpulse, die dem internen Referenzimpuls RI_I überlagert sind, oder durch Mehrfachschalten, insbesondere bei der Ausschaltflanke des internen Referenzimpulses RI_I, zu vermeiden, ist mit Vorteil vor dem Takteingang CLK des ersten D-Flipflops 300 eine Filtereinheit 250 angeordnet. Diese kann im einfachsten Fall aus einem RC-Tiefpass bestehen, der Störimpulse oberhalb einer Grenzfrequenz dämpft, ohne die Signalform des internen Referenzimpulses RI_I signifikant zu beeinträchtigen. Handelt es sich beim internen Referenzimpuls RI_I um ein digitales Signal, kann als Filtereinheit 250 auch ein digitales Tiefpassfilter eingesetzt werden, das Mehrfachschalten verhindert und somit gewährleistet, dass beim Überfahren der Referenzmarke 32 mit der Abtasteinheit 40 nur jeweils genau eine Einschalt- und eine Ausschaltflanke am Takteingang CLK des ersten D-Flipflops 300 auftritt.

Aus den Positionssignalen P0 und P90 wird in einem Richtungsdiskriminator 210 die Bewegungsrichtung der Abtasteinheit 40 relativ zum Maßstab 10, bzw. der Inkrementalspur 20 ermittelt und als Richtungssignal DIR ausgegeben. Die Feststellung der Bewegungsrichtung kann beispielsweise durch Auswertung der Phasenlage der Positionssignale P0, P90 erfolgen. Eilt das zweite Positionssignal P90 dem ersten Positionssignal P0 in einer ersten Bewegungsrichtung voraus, so eilt es in einer zweiten, entgegengesetzten Bewegungsrichtung nach.

Wie Figur 5 zeigt, ist ein Richtungsdiskriminator 210 vorteilhaft realisiert, indem aus den sinusförmigen Positionssignalen P0, P90 mittels Komparatoren 310 durch Vergleich der Signalpegel mit einer Referenzspannung (bei symmetrisch zur Nulllinie angeordneten Sinussignalen kann als Referenzspannung der Bezugspunkt der Schaltung verwendet werden) digitale Positionssignale PD0, PD90 generiert werden, deren Phasenlage die Information über die Bewegungsrichtung enthält. Mit Vorteil sind die Komparatoren 310 so beschaltet, dass sie eine Hysteresefunktion aufweisen. Im dargestellten Beispiel ist zur Bestimmung des Richtungssignals DIR aus der Phasenlage der digitalen Positionssignale PD0, PD90, das zweite digitale Positionssignal PD90 dem Dateneingang Q, das erste digitale Positionssignal PD0 dem Takteingang CLK eines zweiten D-Flipflops 320 zugeführt. Auf diese Weise wird der Pegel des zweiten digitalen Positionssignals PD90 bei jeder steigenden Signalflanke des ersten digitalen Positionssignals PD0 gespeichert und am Ausgang Q als Richtungssignal DIR ausgegeben.

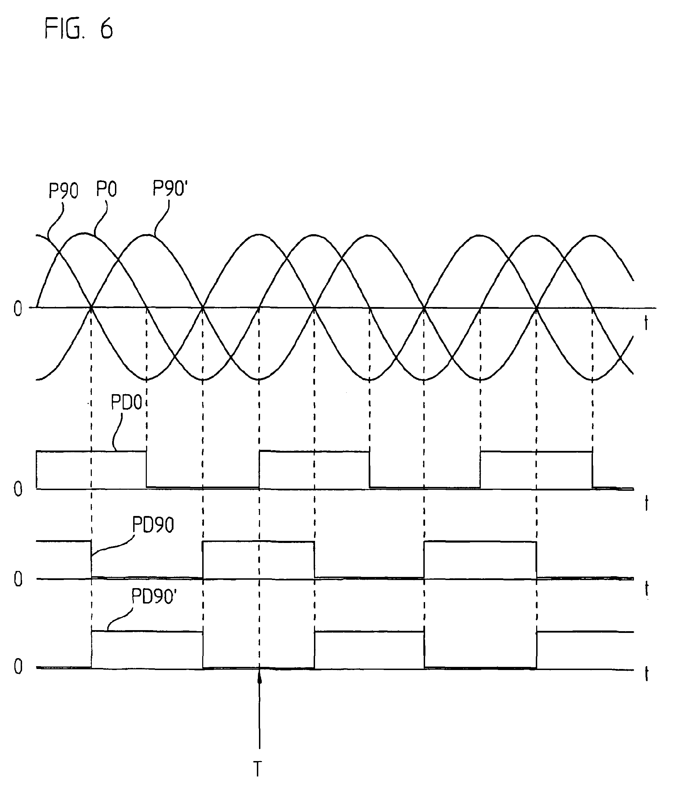

Dies wird anhand von Figur 6 weiter verdeutlicht. Dabei zeigt das obere Diagramm die analogen Positionssignale P0 und P90, wobei das zweite analoge Positionssignal P90 bei entgegengesetzter Bewegungsrichtung als reverses analoges Positionssignal P90' erscheint. Darunter sind die dazu korrespondierenden digitalen Positionssignale PD0, PD90, PD90' dargestellt. Wie am Beispiel der steigenden Signalflanke des ersten digitalen Positionssignals PD0 zum Zeitpunkt T erkennbar, weisen die digitalen zweiten Positionssignale PD90, bzw. PD90' je nach Bewegungsrichtung unterschiedliche digitale Pegel auf.

Der gespeicherte Referenzimpuls RI_M, das Richtungssignal DIR, sowie die Positionssignale P0, P90 sind einer Referenzimpuls-Erzeugungseinheit 220 zugeführt, die den erfindungsgemäßen Referenzimpuls RI erzeugt. Die Referenzimpuls-Erzeugungseinheit 220 schaltet in Abhängigkeit vom Eintreffen des gespeicherten Referenzimpulses RI_M und dem Auftreten einer Setzbedingung den Referenzimpuls RI ein und bei Auftreten einer Rücksetzbedingung wieder aus. Setz- und Rücksetzbedingung werden von wenigstens einem der Positionssignale P0, P90, mit Vorteil jedoch von beiden zueinander um 90° phasenverschobenen Positionssignalen P0, P90 abgeleitet.

Außerdem ist die Referenzimpuls-Erzeugungseinheit 220 zur Übertragung des Rücksetzsignals CLR über eine Signalleitung mit dem Rücksetzeingang R der Referenzimpuls-Speichereinheit 200 verbunden und setzt den gespeicherten Referenzimpuls RI_M vor dem nächsten Auftreten eines analogen Referenzimpulses RI_A, mit Vorteil bereits unmittelbar nach dem Einschalten des Referenzimpulses RI, zurück. Um Mehrfachtriggern, also ein fehlerhaftes erneutes Einspeichern des analogen Referenzimpulses RI_A in das erste D-Flipflop zu verhindern, ist es vorteilhaft, wenn das Rücksetzsignal CLR wenigstens solange gehalten wird, bis die Referenzmarke 32 vollständig überfahren wurde.

Um einen Referenzimpuls RI zu erzeugen, der dem digitalen Referenzimpuls RI_D aus Figur 2 entspricht - Breite 360° und Lage symmetrisch zur 135°-Position des zweiten Positionssignals P90 - kann in der dargestellten Bewegungsrichtung als Setzbedingung der Übergang P90<P0 nach P90>P0 herangezogen werden. Durch die geforderte Breite des Referenzimpulses RI von 360°, entsprechend einer Teilungsperiode, ergibt sich als Rücksetzbedingung das nächste Auftreten des gleichen Übergangs nach dem Auftreten der Setzbedingung.

Mit Vorteil werden Setz- und Rücksetzbedingung richtungsabhängig festgelegt. In der gezeigten Bewegungsrichtung eilt das zweite Positionssignal P90 dem ersten Positionssignal P0 um 90° voraus. In der entgegengesetzten Richtung eilt das zweite Positionssignal P90 dem ersten Positionssignal P0 um 90° nach, was bedeutet, dass sich die Setzbedingung auf den Übergang P0<P90 auf P0>P90 ändert. Ebenso gilt für die Rücksetzbedingung jetzt das zweite Auftreten dieses Übergangs. Der nun entstehende Referenzimpuls RI weist ebenfalls eine Breite von 360° auf, ist jedoch durch das Vertauschen der Reihenfolge der beiden Positionssignale P0, P90 jetzt symmetrisch zur 135°-Position des ersten Positionssignals P0. Zur bewegungsrichtungsabhängigen Auswahl der Setz- bzw. Rücksetzbedingung dient das Richtungssignal DIR.

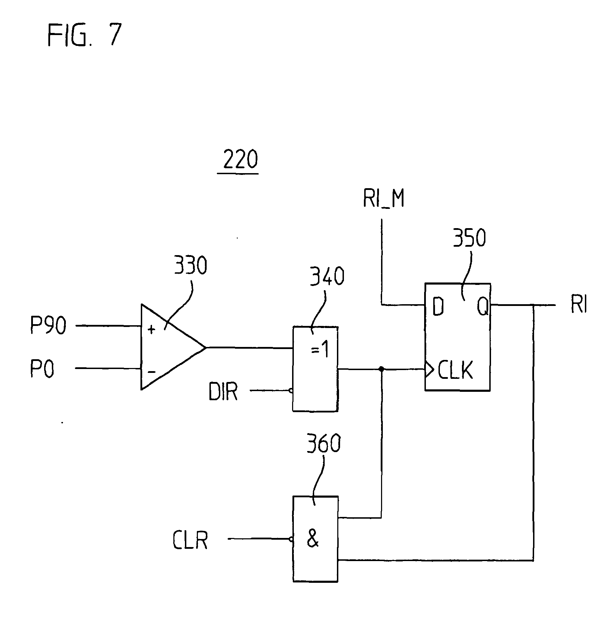

Eine Schaltungsvariante zur bewegungsrichtungsabhängigen Erzeugung des Referenzimpulses RI ist in Figur 7 dargestellt. Zur Ermittlung der Setz- bzw. Rücksetzbedingung werden durch Vergleich der Signalpegel der analogen Positionssignale P0, P90 die Bereiche P0<P90, bzw. P0>P90 mittels eines dritten Komparators 330 ermittelt. Die Flanken des Ausgangssignals des dritten Komparators 330 definieren die Übergänge P0<P90 nach P0>P90, bzw. P90<P0 nach P90>P0. Um Mehrfachschalten des dritten Komparators 330 zu vermeiden, ist es auch hier besonders vorteilhaft, wenn dieser eine Hysteresefunktion aufweist. Das Ausgangssignal des dritten Komparators 330 ist einem Exklusiv-Oder-Gatter 340 zugeführt. Der zweite Eingang des Exklusiv-Oder-Gatters 340 ist mit dem Richtungssignal DIR verbunden, das in diesem Beispiel invertiert verwendet wird. Auf diese Weise entstehen am Ausgang des Exklusiv-Oder-Gatters 340 bewegungsrichtungsabhängig beim Auftreten der Setz- bzw. Rücksetzbedingung positive Signalflanken, die dem Takteingang CLK eines dritten D-Flipflops 350 zugeführt sind. Am Ausgang Q des dritten D-Flipflops 350 erscheint nun bei jeder positiven Signalflanke am Takteingang CLK der logische Signalpegel des am Dateneingang D anliegenden gespeicherten Referenzimpulses RI_M. Das Signal am Ausgang Q entspricht somit dem Referenzimpuls RI. Da dieser bei jedem Auftreten des internen Referenzimpulses RI_I nur für die geforderten 360° ausgegeben werden darf, wird das Rücksetzsignal CLR durch logische NAND-Verknüpfung des Ausgangs Q mit dem Ausgang des Exklusiv-Oder-Gatters 340 erzeugt. Der gespeicherte Referenzimpuls RI_M wird somit unmittelbar nach dem Einschalten des Referenzimpulses RI wieder gelöscht. Wie von der in Figur 4 dargestellten Referenzimpuls-Speichereinheit 200 gefordert, ist das Rücksetzsignal CLR lowaktiv, das bedeutet, das Rücksetzen der Referenzimpuls-Speichereinheit 200 erfolgt bei einem Übergang des Rücksetzsignals CLR von einem Highpegel zu einem Lowpegel.

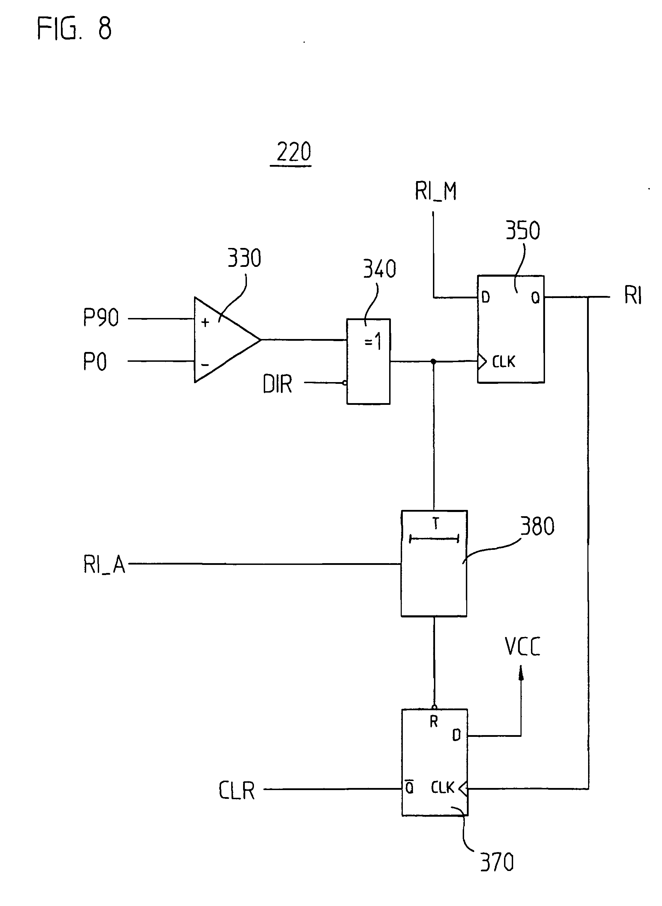

Figur 8 zeigt eine alternative Ausführung zur in Figur 7 dargestellten Schaltungsvariante, bei der das Rücksetzsignal CLR über die Dauer des internen Referenzimpulses RI_I hinaus aktiv gehalten wird. Das ist dann notwendig, wenn nicht gewährleistet werden kann, dass am Takteingang CLK des ersten D-Flipflops 300 am Ende des internen Referenzimpulses RI_I nur genau eine Flanke auftritt. Besonders kritisch ist es, wenn die Referenzmarke 32 von der Abtasteinheit 40 sehr langsam überfahren wird, da die entstehende langsame Signalflanke des analogen Referenzimpulses RI_A bei der weiteren Verarbeitung in der Referenzimpuls-Verarbeitungseinheit 240, beispielsweise bei der Umwandlung in ein digitales Signal mittels eines Komparators, Mehrfachschalten des internen Referenzimpulses RI_I verursachen kann.

In der alternativen Ausführung von Figur 8 dient zum Aktivieren des Rücksetzsignals CLR ein viertes D-Flipflop, dessen invertierender Ausgang /Q durch die Ausgabe des Referenzimpulses RI auf logischen Lowpegel gesetzt wird. Die Deaktivierung des Rücksetzsignals CLR wird nun durch ein Verzögerungsglied 380 verzögert durchgeführt. Als Bezugssignal für den Start der Verzögerung kann, wie in Figur 8 dargestellt, der analoge Referenzimpuls RI_A, bzw. dessen Ein- oder Ausschaltflanke, dienen. Ebenso geeignet sind der interne Referenzimpuls RI_I der gespeicherte Referenzimpuls RI_M oder der Referenzimpuls RI.

Für die Realisierung des Verzögerungsgliedes 380 sind beispielsweise Schieberegister- oder Zählerschaltungen geeignet, als Schiebe- bzw. Zähltakt kann das aus dem Richtungssignal DIR und den Positionssignalen P0, P90 abgeleitete Signal am Ausgang des Exklusiv-Oder-Gatters 340 verwendet werden. Mit Vorteil ist das Verzögerungsglied 380 so ausgeführt, dass das Rücksetzsignal CLR bis wenigstens eine zurückgelegte Teilungsperiode nach dem vollständigen Überfahren der Referenzmarke 32 aktiv ist.

Es sei an dieser Stelle ausdrücklich darauf hingewiesen, dass auf den Richtungsdiskriminator 210 verzichtet werden kann, wenn die Setz- und Rücksetzbedingung lediglich auf eines der Positionssignale P0, P90 bezogen sind, beispielsweise Setzbedingung erster positiver Nulldurchgang, Rücksetzbedingung nächster positiver Nulldurchgang des zweiten Positionssignals P90 nach Auftreten des gespeicherten Referenzimpulses RI_M. Ebenso ist kein Richtungsdiskriminator 210 notwendig, wenn die Folgeelektronik 100 zwei verschiedene Lagen des Referenzimpulses RI verarbeiten kann. So entsteht bei oben genannter Setz-/Rücksetzbedingung - erster und zweiter Übergang P90<P0 nach P90>P0 - in entgegengesetzter Bewegungsrichtung ein Referenzimpuls RI, der ebenfalls eine Breite von 360° aufweist, jedoch symmetrisch um die 225°-Position angeordnet ist.

Zusammenfassend liegen der erfindungsgemäßen Anordnung die folgenden Verfahrensschritte zugrunde:
1. Speichern des analogen Referenzimpulses RI_A in der Referenzimpuls-Speichereinheit 200 und Ausgabe des gespeicherten Referenzimpulses RI_M an die Referenzimpuls-Erzeugungseinheit 220.
2. Einschalten des Referenzimpulses RI in der Referenzimpuls-Erzeugungseinheit 220 in Abhängigkeit vom gespeicherten Referenzimpuls RI_M und dem Auftreten einer Setzbedingung.
3. Ausschalten des Referenzimpulses RI in der Referenzimpuls-Erzeugungseinheit 220 nach Auftreten einer Rücksetzbedingung.

Setz- und Rücksetzbedingung sind jeweils aus wenigstens einem Positionssignal P0, P90, mit Vorteil jedoch aus einer Kombination beider Positionssignale P0, P90, ableitbar.

Vor dem nächsten Überfahren der Referenzmarke 32 wird die Referenzimpuls-Speichereinheit 200 mittels eines Rücksetzsignals CLR wieder zurückgesetzt. Mit Vorteil erfolgt die Erzeugung des Rücksetzsignals CLR in der Referenzimpuls-Erzeugungseinheit 220 zwischen dem zweiten und dem dritten Verfahrensschritt.

Weiter ist es besonders vorteilhaft, insbesondere im Hinblick auf marktüblich ausgestattete Folgeelektroniken, wenn Setz- bzw. Rücksetzbedingung bewegungsrichtungsabhängig unter Verwendung eines Richtungssignals DIR, das in einem Richtungsdiskriminator 210 erzeugt wird, angepasst werden.

Die digitalen Komponenten der vorliegenden Erfindung sind besonders dazu geeignet, in programmierbare Digitalbausteine, wie zum Beispiel CPLD's oder FPGA's integriert zu werden. Durch den daraus resultierenden geringen Platzbedarf ist es vorteilhaft, die erfindungsgemäße Anordnung direkt in der Abtasteinheit 40 des Positionsmessgeräts anzuordnen.

Die erfindungsgemäße Anordnung, sowie das zugrundeliegende Verfahren zur Erzeugung eines Referenzimpulses sind sowohl bei Längen- als auch bei Winkelmessgeräten einsetzbar.

## Patentansprüche

1. Anordnung zur Erzeugung eines Referenzimpulses (RI) für ein Positionsmessgerät, das eine Maßverkörperung (10) mit wenigstens einer Inkrementalspur (20) und wenigstens einer Referenzmarke (32), sowie eine Abtasteinheit (40) zur Erzeugung von Positionssignalen (P0, P90) durch Abtasten der wenigstens einen Inkrementalspur (20) und zur Erzeugung eines analogen Referenzimpulses (RI_A) durch Abtasten der wenigstens einen Referenzmarke (32), umfasst, wobei
• das Auftreten des analogen Referenzimpulses (RI_A) in einer Referenzimpuls-Speichereinheit (200) als gespeicherter Referenzimpuls (RI_M) speicherbar ist,
• der gespeicherte Referenzimpuls (RI_M) und wenigstens ein Positionssignal (P0, P90) einer Referenzimpuls-Erzeugungseinheit (220) zugeführt sind, die den Referenzimpuls (RI) in Abhängigkeit vom gespeicherten Referenzimpuls (RI_M) und dem Auftreten einer Setzbedingung einschaltet und bei Auftreten einer Rücksetzbedingung ausschaltet und Setz- und Rücksetzbedingung aus dem wenigstens einen Positionssignal (P0, P90) ableitbar sind.

2. Anordnung nach Anspruch 1, wobei wenigstens zwei Positionssignale (P0, P90), die eine Phasenverschiebung zueinander aufweisen, einem Richtungsdiskriminator (210) zugeführt sind, mit dem durch Feststellung der Phasenlage der wenigstens zwei Positionssignale (P0, P90) ein Richtungssignal (DIR) generierbar ist, das die Bewegungsrichtung anzeigt, dass das Richtungssignal (DIR) der Referenzimpuls-Erzeugungseinheit (220) zugeführt ist und die Setz- und Rücksetzbedingung in der Referenzimpuls-Erzeugungseinheit (220) in Abhängigkeit vom Richtungssignal (DIR) wählbar ist.

3. Anordnung nach Anspruch 2, wobei der Richtungsdiskriminator (210) zwei Komparatoren (310) umfasst, mit denen aus den Positionssignalen (P0, P90) digitale Positionssignale (PDO, PD90) erzeugbar sind und das Richtungssignal (DIR) durch Bestimmung des digitalen Pegels eines zweiten digitalen Positionssignals (PD90) zum Zeitpunkt einer Signalflanke (T) eines ersten digitalen Positionssignals (PD0) generierbar ist.

4. Anordnung nach einem der vorhergehenden Ansprüche, wobei Setz- und Rücksetzbedingung von einem ersten Positionssignal (P0) und einem zweiten Positionssignal (P90) abgeleitet sind und wobei die Setzbedingung in einer ersten Bewegungsrichtung der Übergang zweites Positionssignal (P90) < erstes Positionssignal (P0) nach zweites Positionssignal (P90) > erstes Positionssignal (P0) und in einer zweiten Bewegungsrichtung der Übergang erstes Positionssignal (P0) < zweites Positionssignal (P90) nach erstes Positionssignal (P0) > zweites Positionssignal (P90) ist und wobei die Rücksetzbedingung jeweils das auf das Auftreten der Setzbedingung folgende Auftreten des gleichen Übergangs wie die Setzbedingung ist und in der Referenzimpuls-Erzeugungseinheit (220) die Zeitpunkte des Auftretens der Setz-/Rücksetzbedingung durch Vergleich der Signalpegel der Positionssignale (P0, P90) in einem dritten Komparator (330) ermittelbar sind.

5. Anordnung nach einem der vorhergehenden Ansprüche, wobei die digitalen Komponenten der Anordnung in einem CPLD oder FPGA integriert sind.

6. Verfahren zur Erzeugung eines Referenzimpulses (RI) für ein Positionsmessgerät, das eine Maßverkörperung (10) mit wenigstens einer Inkrementalspur (20) und wenigstens einer Referenzmarke (32), sowie eine Abtasteinheit (40) zur Erzeugung von Positionssignalen (P0, P90) durch Abtasten der wenigstens einen Inkrementalspur (20) und zur Erzeugung eines analogen Referenzimpulses (RI_A) durch Abtasten der wenigstens einen Referenzmarke (32), umfasst, mit folgenden Schritten:
• Speichern des Auftretens des analogen Referenzimpulses (RI_A) in der Referenzimpuls-Speichereinheit (200) und Ausgabe des gespeicherten Referenzimpulses (RI_M) an die Referenzimpuls-Erzeugungseinheit (220),
• Einschalten des Referenzimpulses (RI) in der Referenzimpuls-Erzeugungseinheit (220) in Abhängigkeit vom gespeicherten Referenzimpuls (RI_M) und dem Auftreten einer Setzbedingung, die aus wenigstens einem Positionssignal (P0, P90) ableitbar ist,
• Ausschalten des Referenzimpulses (RI) in der ReferenzimpulsErzeugungseinheit (220) nach Auftreten einer Rücksetzbedingung, die aus wenigstens einem Positionssignal (P0, P90) ableitbar ist.

7. Verfahren nach Anspruch 6, wobei die Setz- und die Rücksetzbedingung bewegungsrichtungsabhängig anhand eines Richtungssignals (DIR) festgelegt werden, das in einem Richtungsdiskriminator (210) erzeugt wird.

8. Verfahren nach Anspruch 7, wobei im Richtungsdiskriminator (210) mittels zweier Komparatoren (310) aus den Positionssignalen (P0, P90) digitale Positionssignale (PDO, PD90) erzeugt werden und das Richtungssignal (DIR) durch Bestimmung des digitalen Pegels eines zweiten digitalen Positionssignals (PD90) zum Zeitpunkt einer Signalflanke (T) eines ersten digitalen Positionssignals (PD0) generiert wird.

9. Verfahren nach einem der Ansprüche 6 bis 8, wobei Setz- und Rücksetzbedingung von einem ersten Positionssignal (P0) und einem zweiten Positionssignal (P90) abgeleitet werden und wobei die Setzbedingung in einer ersten Bewegungsrichtung der Übergang zweites Positionssignal (P90) < erstes Positionssignal (P0) nach zweites Positionssignal (P90) > erstes Positionssignal (P0) und in einer zweiten Bewegungsrichtung der Übergang erstes Positionssignal (P0) < zweites Positionssignal (P90) nach erstes Positionssignal (P0) > zweites Positionssignal (P90) ist und wobei die Rücksetzbedingung jeweils das auf das Auftreten der Setzbedingung folgende nächste Auftreten des gleichen Übergangs wie die Setzbedingung ist und die Zeitpunkte des Auftretens der Setz-/Rücksetz-bedingung in der Referenzimpuls-Erzeugungseinheit (220) durch Vergleich der Signalpegel der Positionssignale (P0, P90) in einem dritten Komparator (330) ermittelt werden.

10. Verfahren nach einem der Ansprüche 6 bis 9, wobei die Referenzimpuls-Erzeugungseinheit (220) nach dem Einschalten des Referenzimpulses (RI) ein Rücksetzsignal (CLR) zum Löschen des gespeicherten Referenzimpulses (RI_M) in der Referenzimpuls-Speichereinheit (200) erzeugt.

11. Positionsmessgerät, umfassend eine Maßverkörperung (10) mit wenigstens einer Inkrementalspur (20) und wenigstens einer Referenzmarke (32), sowie eine Abtasteinheit (40) zur Erzeugung von Positionssignalen (P0, P90) durch Abtasten der wenigstens einen Inkrementalspur (20) und zur Erzeugung eines analogen Referenzimpulses (RI_A) durch Abtasten der wenigstens einen Referenzmarke (32), wobei das Positionsmessgerät weiter eine Anordnung zur Erzeugung eines Referenzimpulses (RI) nach einem der Ansprüche 1 bis 5 umfasst.

## Claims

1. Arrangement for generating a reference pulse (RI) for a position measuring device, which comprises a measuring scale (10) having at least one incremental track (20) and at least one reference mark (32), and also a scanning unit (40) for generating position signals (P0, P90) by scanning the at least one incremental track (20) and for generating an analogue reference pulse (RI_A) by scanning the at least one reference mark (32), wherein
• the occurrence of the analogue reference pulse (RI_A) can be stored in a reference pulse storage unit (200) as a stored reference pulse (RI_M),
• the stored reference pulse (RI_M) and at least one position signal (P0, P90) are fed to a reference pulse generating unit (220), which switches on the reference pulse (RI) as a function of the stored reference pulse (RI_M) and the occurrence of a set condition, and switches off the reference pulse upon the occurrence of a reset condition, and the set and reset conditions can be derived from the at least one position signal (P0, P90).

2. Arrangement according to Claim 1, wherein at least two position signals (P0, P90) which have a phase shift in relation to each other are fed to a direction discriminator (210), with which, by establishing the phase angle of the at least two position signals (P0, P90), a direction signal (DIR) which indicates the direction of movement can be generated, wherein the direction signal (DIR) is fed to the reference pulse generating unit (220), and the set and reset conditions in the reference pulse generating unit (220) can be chosen as a function of the direction signal (DIR).

3. Arrangement according to Claim 2, wherein the direction discriminator (210) comprises two comparators (310), with which digital position signals (PDO, PD90) can be generated from the position signals (P0, P90), and the direction signal (DIR) can be generated by determining the digital level of a second digital position signal (PD90) at the time of a signal flank (T) of a first digital position signal (PD0).

4. Arrangement according to one of the preceding claims, wherein the set and reset conditions are derived from a first position signal (P0) and a second position signal (P90), and wherein the set condition in a first direction of movement is the transition second position signal (P90) < first position signal (P0) to second position signal (P90) > first position signal (P0) and, in a second direction of movement, is the transition first position signal (P0) < second position signal (P90) to first position signal (P0) > second position signal (P90), and wherein the reset condition is respectively the occurrence of the same transition as the set condition following the occurrence of the set condition and, in the reference pulse generating unit (220), the times of the occurrence of the set/reset condition can be determined by comparing the signal levels of the position signals (P0, P90) in a third comparator (330).

5. Arrangement according to one of the preceding claims, wherein the digital components of the arrangement are integrated in a CPLD or FPGA.

6. Method for generating a reference pulse (RI) for position measuring device which comprises a measuring scale (10) that has at least one incremental track (20) and at least one reference mark (32), and also a scanning unit (40) for generating position signals (P0, P90) by scanning the at least one incremental track (20) and for generating an analogue reference pulse (RI_A) by scanning the at least one reference mark (32), comprising the following steps:
• storing the occurrence of the analogue reference pulse (RI_A) in the reference pulse storage unit (200) and outputting the stored reference pulse (RI_M) to the reference pulse generating unit (220),
• switching on the reference pulse (RI) in the reference pulse generating unit (220) as a function of the stored reference pulse (RI_M) and the occurrence of a set condition, which can be derived from at least one position signal (P0, P90).
• switching off the reference pulse (RI) in the reference pulse generating unit (220) following the occurrence of a reset condition, which can be derived from at least one position signal (P0, P90).

7. Method according to Claim 6, wherein the set and the reset conditions are defined as a function of the direction of movement by using a direction signal (DIR), which is generated in a direction discriminator (210).

8. Method according to Claim 7, wherein in the direction discriminator (210) digital position signals (PD0, PD90) are generated from the position signals (P0, P90) by means of two comparators (310), and the direction signal (DIR) is generated by determining the digital level of a second digital position signal (PD90) at the time of a signal flank (T) of a first digital position signal (PD0).

9. Method according to one of Claims 6 to 8, wherein the set and reset conditions are derived from a first position signal (P0) and a second position signal (P90), and wherein each set condition in a first direction of movement is the transition second position signal (P90) < first position signal (P0) to second position signal (P90) > first position signal (P0) and, in a second direction of movement, is the transition first position signal (P0) < second position signal (P90) to first position signal (P0) > second position signal (P90), and wherein the reset condition is respectively the next occurrence of the same transition as the set condition following the occurrence of the set condition, and the times of the occurrence of the set/reset condition are determined in the reference pulse generating unit (220) by comparing the signal levels of the position signals (P0, P90) in a third comparator (330).

10. Method according to one of Claims 6 to 9, wherein, after the reference pulse (RI) has been switched on, the reference pulse generating unit (220) generates a reset signal (CLR) in order to delete the stored reference pulse (RI_M) in the reference pulse storage unit (200).

11. Position measuring device, comprising a measuring scale (10) having at least one incremental track (20) and at least one reference mark (32), and also a scanning unit (40) for generating position signals (P0, P90) by scanning the at least one incremental track (20) and for generating an analogue reference pulse (RI_A) by scanning the at least one reference mark (32), wherein the position measuring device further comprises an arrangement for generating a reference pulse (RI) according to one of Claims 1 to 5.

## Revendications

1. Arrangement pour générer une impulsion de référence (RI) pour un appareil de mesure de la position, lequel comprend un étalon (10) avec au moins une piste incrémentale (20) et au moins un repère de référence (32) ainsi qu'une unité de palpage (40) pour générer des signaux de position (P0, P90) par palpage de l'au moins une piste incrémentale (20) et pour générer une impulsion de référence analogique (RI_A) par palpage de l'au moins un repère de référence (32), avec lequel
* l'apparition de l'impulsion de référence analogique (RI_A) peut être mise en mémoire dans une unité de mémorisation d'impulsion de référence (200) en tant qu'impulsion de référence (RI_M) mise en mémoire,
* l'impulsion de référence (RI_M) mise en mémoire et au moins un signal de position (P0, P90) sont acheminés à une unité de génération d'impulsion de référence (220) qui met en circuit l'impulsion de référence (RI) en fonction de l'impulsion de référence (RI_M) mise en mémoire et de l'apparition d'une condition d'activation et la met hors circuit lors de l'apparition d'une condition de rétablissement, et la condition d'activation et de rétablissement peuvent être dérivées de l'au moins un signal de position (P0, P90).

2. Arrangement selon la revendication 1, avec lequel au moins deux signaux de position (P0, P90) qui présentent un déphasage l'un par rapport à l'autre sont acheminés à un discriminateur de direction (210) qui, en déterminant le déphasage des au moins deux signaux de position (P0, P90), permet de générer un signal de direction (DIR) qui indique le sens de déplacement, et avec lequel le signal de direction (DIR) est acheminé à l'unité de génération d'impulsion de référence (220) et la condition d'activation et de rétablissement dans l'unité de génération d'impulsion de référence (220) peuvent être sélectionnées en fonction du signal de direction (DIR).

3. Arrangement selon la revendication 2, avec lequel le discriminateur de direction (210) comprend deux comparateurs (310) avec lesquels des signaux de position numériques (PD0, PD90) peuvent être générés à partir des signaux de position (P0, P90) et le signal de direction (DIR) peut être généré par détermination du niveau numérique d'un deuxième signal de position numérique (PD90) à l'instant d'un front de signal (T) d'un premier signal de position numérique (PD0).

4. Arrangement selon l'une des revendications précédentes, avec lequel la condition d'activation et de rétablissement sont dérivées d'un premier signal de position (P0) et d'un deuxième signal de position (P90) et avec lequel la condition d'activation, dans un premier sens de déplacement, est la transition de deuxième signal de position (P90) < premier signal de position (P0) vers deuxième signal de position (P90) > premier signal de position (P0) et, dans un deuxième sens de déplacement, la transition de premier signal de position (P0) < deuxième signal de position (P90) vers premier signal de position (P0) > deuxième signal de position (P90) et avec lequel la condition de rétablissement est à chaque fois l'apparition de la même transition que la condition d'activation à la suite de l'apparition de la condition d'activation et les instants de l'apparition de la condition d'activation/rétablissement peuvent être déterminés dans l'unité de génération d'impulsion de référence (220) par comparaison du niveau de signal des signaux de position (P0, P90) dans un troisième comparateur (330).

5. Arrangement selon l'une des revendications précédentes, avec lequel les composants numériques de l'arrangement sont intégrés dans un CPLD ou un FPGA.

6. Procédé pour générer une impulsion de référence (RI) pour un appareil de mesure de la position, lequel comprend un étalon (10) avec au moins une piste incrémentale (20) et au moins un repère de référence (32) ainsi qu'une unité de palpage (40) pour générer des signaux de position (P0, P90) par palpage de l'au moins une piste incrémentale (20) et pour générer une impulsion de référence analogique (RI_A) par palpage de l'au moins un repère de référence (32), comprenant les étapes suivantes :
* mise en mémoire de l'apparition de l'impulsion de référence analogique (RI_A) dans l'unité de mémorisation d'impulsion de référence (200) et délivrance de l'impulsion de référence (RI_M) mise en mémoire sur l'unité de génération d'impulsion de référence (220),
* mise en circuit de l'impulsion de référence (RI) dans l'unité de génération d'impulsion de référence (220) en fonction de l'impulsion de référence (RI_M) mise en mémoire et de l'apparition d'une condition d'activation qui peut être dérivée d'au moins un signal de position (P0, P90),
* mise hors circuit de l'impulsion de référence (RI) dans l'unité de génération d'impulsion de référence (220) après l'apparition d'une condition de rétablissement qui peut être dérivée d'au moins un signal de position (P0, P90).

7. Procédé selon la revendication 6, selon lequel la condition d'activation et celle de rétablissement sont définies en fonction du sens de déplacement à l'aide d'un signal de direction (DIR) qui est généré dans un discriminateur de direction (210).

8. Procédé selon la revendication 7, selon lequel des signaux de position numériques (PD0, PD90) sont générés dans le discriminateur de direction (210) à partir des signaux de position (P0, P90) au moyen de deux comparateurs (310) et le signal de direction (DIR) est généré par détermination du niveau numérique d'un deuxième signal de position numérique (PD90) à l'instant d'un front de signal (T) d'un premier signal de position numérique (PD0).

9. Procédé selon l'une des revendications 6 à 8, selon lequel la condition d'activation et de rétablissement sont dérivées d'un premier signal de position (P0) et d'un deuxième signal de position (P90) et selon lequel la condition d'activation, dans un premier sens de déplacement, est la transition de deuxième signal de position (P90) < premier signal de position (P0) vers deuxième signal de position (P90) > premier signal de position (P0) et, dans un deuxième sens de déplacement, la transition de premier signal de position (P0) < deuxième signal de position (P90) vers premier signal de position (P0) > deuxième signal de position (P90) et selon lequel la condition de rétablissement est à chaque fois l'apparition suivante de la même transition que la condition d'activation à la suite de l'apparition de la condition d'activation et les instants de l'apparition de la condition d'activation/rétablissement sont déterminés dans l'unité de génération d'impulsion de référence (220) par comparaison du niveau de signal des signaux de position (P0, P90) dans un troisième comparateur (330).

10. Procédé selon l'une des revendications 6 à 9, selon lequel l'unité de génération d'impulsion de référence (220), après la mise en circuit de l'impulsion de référence (RI), génère un signal de rétablissement (CLR) pour effacer l'impulsion de référence (RI_M) mise en mémoire dans l'unité de mémorisation d'impulsion de référence (200).

11. Appareil de mesure de la position, comprenant un étalon (10) avec au moins une piste incrémentale (20) et au moins un repère de référence (32) ainsi qu'une unité de palpage (40) pour générer des signaux de position (P0, P90) par palpage de l'au moins une piste incrémentale (20) et pour générer une impulsion de référence analogique (RI_A) par palpage de l'au moins un repère de référence (32), l'appareil de mesure de la position comprenant en outre un arrangement pour générer une impulsion de référence (RI) selon l'une des revendications 1 à 5.
